# EUROPEAN PATENT APPLICATION

(11) **EP 1 707 407 A1**
(43) Date of publication of application: **04.10.2006**
(21) Application number: 06110053.3
(22) Date of filing: 16.02.2006
(51) Int. Cl.: B60G 17/015, B60G 17/052, B60G 17/016, F16F 9/04, B60G 15/12

(54) **Air suspension and electronically controlled suspension system**

(30) Priority: 29.03.2005 KR 2005025778
(71) Applicant: Mando Corporation, Seoul 135-739 (KR)
(72) Inventor: Kim, Jong Heon, Seoul 157-015 (KR)
(74) Representative: Intes, Didier Gérard André

(57) **Abstract**

The present invention relates to an air suspension and an electronically controlled suspension system. An electronically controlled suspension system of the present invention comprises an air suspension including a volume expander (16) connected to a pressure acting volume of an air spring to expand the pressure acting volume, and a volume control valve (17) for opening or closing the connection between the pressure acting volume and the volume expander; a mode-changing switch (32) for applying a mode-setting key signal according to a driver's button operation; an electronic control unit (30) for outputting a valve control signal for use in exhibiting a suspension characteristic of the vehicle in response to the mode-setting key signal from the mode-changing switch; and an air spring volume adjustor (43) for controlling a spring rate of the air spring through adjustment of the pressure acting volume of the air spring by opening or closing the volume control valve in response to the valve control signal from the electronic control valve, thereby forcibly setting the suspension characteristic of the vehicle. The present invention is to control a spring rate of an air spring employed in an air suspension to a range of damping force characteristics of a relevant mode by selectively controlling a pressure acting volume of the air spring using a fast response valve in response to a signal corresponding to a driver's mode-changing operation. Thus, during sudden braking, rapid acceleration or cornering, a driver can conveniently change characteristics of a vehicle mounted with the air suspension by operating a button within the vehicle, resulting in maximization of consumers' satisfaction.

## Description

### BACKGROUND OF THE INVENTION

### 1. Field of the Invention

The present invention relates to an air suspension, and more particularly, to an air suspension and an electronically controlled suspension (ECS) system, wherein when a lateral motion occurs in a vehicle mounted with an air suspension, the movement of the vehicle can be rapidly and efficiently stabilized.

### 2. Description of the Related Art

Generally, a suspension for a vehicle is provided to absorb a shock transmitted from a road, thereby improving ride comfort, travel stability and a cornering characteristic. Such suspensions include an air suspension mounted on a large-sized vehicle such as a bus.

Since an air suspension employs an air spring using elasticity of compressed air, it can exhibit superior ride comfort due to its flexible elasticity and absorption of minute vibration and also consistently maintain a ride height regardless of a load by controlling the pressure of the compressed air. According to a tendency toward a higher-grade vehicle, the use of the air suspension rapidly increases such as application thereof to a recreational vehicle.

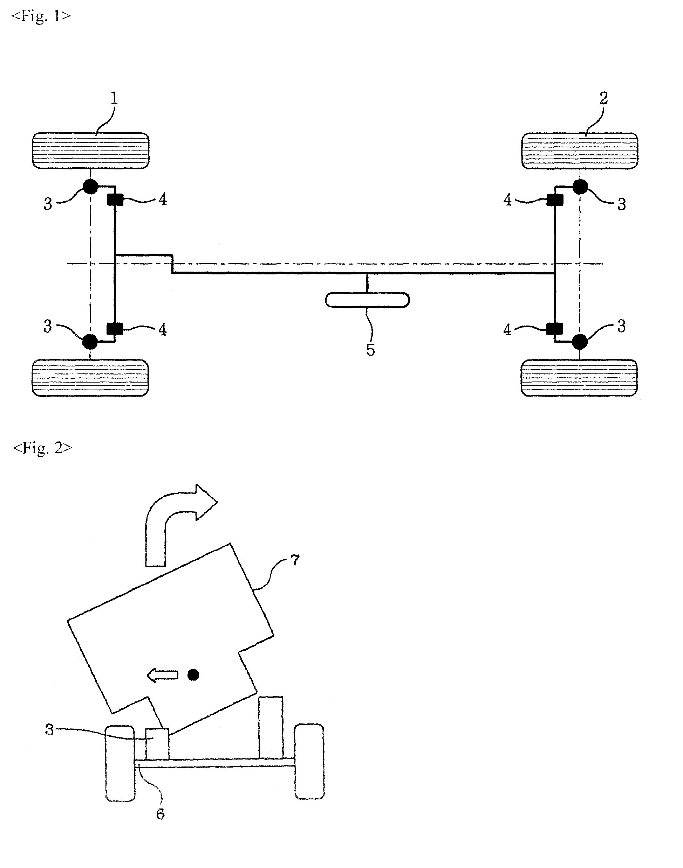

Fig. 1 is a view showing the configuration of an air supply line of a conventional air suspension for a vehicle, in which air springs are installed between a vehicle body (frame) and axles to absorb vibration generated when the vehicle travels.

A total of four air springs 3, including a pair of air springs at front wheels 1 and a pair of air springs at rear wheels 2, are installed in the vehicle. These air springs 3 receive compressed air from an air tank 5 through connection pipes. Leveling valves 4, including two for the front wheels and two for the rear wheels, are installed at the connection tubes to regulate the amount of air within the air springs 3, so that behaviors of the vehicle (restoration from an inclined state, and upward movement from a downward moved state) can be controlled.

Meanwhile, when a lateral motion is produced at the vehicle due to cornering, a roll phenomenon in which a vehicle body 7 is inclined radially outward with respect to a cornering path due to the centrifugal force occurs as shown in Fig. 2. Such a roll phenomenon causes deterioration of ride comfort and travel stability. To avoid the occurrence of the roll phenomenon, air springs at a declined side are supplied with compressed air from the air tank through the leveling valves, and air is discharged from air springs at an opposite side, thereby preventing the vehicle from being excessively slanted.

However, in view of features of a pneumatic device, the conventional air suspension does not have a rapid enough response to respond to a lateral motion produced for a short period of time, resulting in insignificant control benefits. Even in a case where the occurrence of the lateral motion is terminated and the vehicle should return to a normal travel condition, there is a problem in that it takes a great deal of time to balance in a lateral direction by rapidly equalizing pressure within the right and left air springs, thereby deteriorating the motional performance of the vehicle.

To this end, it may be considered that both a pneumatic circuit capable of simultaneously supplying and discharging air and a pneumatic circuit capable of equalizing pressure in the right and left air springs upon control restoration are installed at the air springs. However, this causes a problem in that a pneumatic circuit is complicated and costs of the air suspension increase.

Further, if a specific vehicle motion such as roll, dive or squat occurs, conventional technology for controlling an electronically controlled suspension can check the status of a vehicle through input from sensors and perform control only when the control is required. However, the conventional technology has a problem in that a driver cannot continuously change a vehicle motion as desired at a time when the driver wants to do rather than at predetermined time.

### SUMMARY OF THE INVENTION

The present invention is conceived to solve the aforementioned problems in the prior art. Accordingly, an object of the present invention is to provide an air suspension capable of controlling a spring rate of an air spring of the air suspension by adjusting a pressure acting volume of the air spring.

Another object of the present invention is to provide an electronically controlled suspension system, wherein when a lateral motion occurs in a vehicle mounted with an air suspension, a spring rate of an air spring of the air suspension is controlled to rapidly and efficiently stabilize the movement of the vehicle.

A further object of the present invention is to provide an electronically controlled suspension system, wherein a spring rate of an air spring of an air suspension is selectively controlled to be set to a predetermined range of damping force characteristics by means of a driver's mode-changing operation, so that a driver can arbitrarily and forcibly reflect the suspension characteristics.

According to an aspect of the present invention for achieving the objects, there is provided an air suspension comprising a damper installed between a vehicle body and an axle of a vehicle to absorb a vibration or shock that the axle receives from a road when the vehicle travels; an air piston installed outside the damper; a rubber tube coupled to the air piston to function as an air spring; a cap coupled to an upper portion of the rubber tube and coupled to an upper end of a piston rod of the damper; a volume expander connected to the outside of the cap and connected to the inside of the rubber tube to expand a pressure acting volume of the rubber tube; and a volume control valve for opening or closing the connection between the inside of the rubber tube and the volume expander to determine the pressure acting volume of the air spring.

According to another aspect of the present invention, there is provided an electronically controlled suspension system, comprising an air suspension including a volume expander connected to a pressure acting volume of an air spring to expand the pressure acting volume, and a volume control valve for opening or closing the connection between the pressure acting volume and the volume expander; a mode-changing switch for applying a mode-setting key signal according to a driver's button operation; an electronic control unit for outputting a valve control signal for use in exhibiting a suspension characteristic of the vehicle according to a mode-setting range tabulated in the mode table in response to the mode-setting key signal from the mode-changing switch; and an air spring volume adjustor for controlling a spring rate of the air spring through adjustment of the pressure acting volume of the air spring by opening or closing the volume control valve in response to the valve control signal from the electronic control valve, thereby forcibly setting the suspension characteristic of the vehicle.

### BRIEF DESCRIPTION OF THE DRAWINGS

The above and other objects, features and advantages of the present invention will become apparent from the following description of preferred embodiments given in conjunction with the accompanying drawings, in which:
Fig. 1 is a view showing the configuration of an air supply line of a conventional air suspension for a vehicle;
Fig. 2 is a view showing a state where a roll phenomenon occurs when a vehicle is cornering;
Fig. 3 is a sectional view showing the structure of an air spring employed in an air suspension according to the present invention; and
Fig. 4 is a block diagram showing the configuration of an electronically controlled suspension system according to the present invention.

### DESCRIPTION OF THE PREFERRED EMBODIMENT

Hereinafter, preferred embodiments of the present invention will be described in detail with reference to the accompanying drawings. The objects, features and advantages of the present invention will be better understood through the embodiments. However, the present invention is not limited to the embodiments.

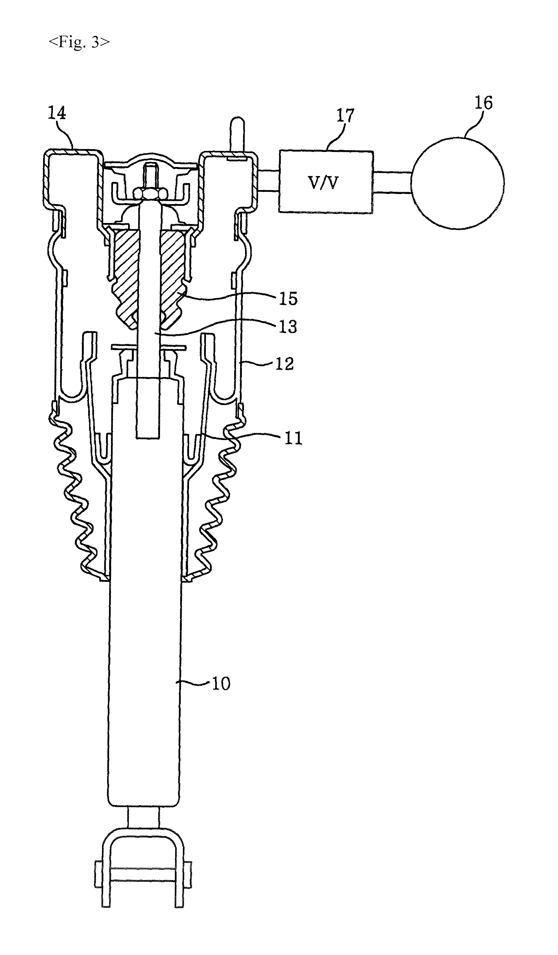

Fig. 3 is a sectional view showing the structure of an air spring employed in an air suspension according to the present invention. Referring to the structure, the air spring comprises a damper 10 as a vibration-proof and shock-absorbing device installed between a vehicle body and an axle of a vehicle to absorb a vibration or shock that the axle receives from a road when the vehicle travels; a cylindrical air piston 11 concentrically installed outside the damper 10; a rubber tube 12 airtightly coupled to an upper or lower end of the air piston 11 to function as an air spring; a cap 14 airtightly coupled to an upper portion of the rubber tube 12 and coupled to an upper end of a piston rod 13 of the damper 10 through a joint; an air port (not shown) for use in supplying compressed air from an air supply means (not shown) to the air piston 11; a rubber bumper 15 fixed to the cap 14 to absorb a shock when the piston rod 13 is retracted; a volume expander 16 attached to the outside of the cap 14 and connected to the inside of the rubber tube 12 to expand a pressure acting volume of the air spring; and a volume control valve 17 for opening or closing the connection between the inside of the rubber tube 12 and the volume expander 16 to determine the pressure acting volume of the air spring.

At this time, the air spring employed in the air suspension shown in Fig. 3 has been described and illustrated as having a structure in which the damper 10, the air piston 11 and the rubber tube 12 are formed integrally with one another. However, it is not limited to such a structure. The air spring may have a discrete structure in which the air piston 11 and the rubber tube 12 are installed between the vehicle body and the axle and the damper 10 is separately installed between the vehicle body and the axle.

The volume expander 16 expands the inner pressure acting volume of the air spring so that a natural frequency of the air spring can be implemented to be a natural frequency lower than that of a coil spring. The volume expander 16 is additionally attached to the cap 14 such that it does not suffer from interference with other parts when mounted in a narrow space such as an engine room of the vehicle. Alternatively, the volume expander 16 may be additionally attached to the outside of the air piston 11.

In the air spring constructed as above, the rubber tube 12 is filled with the compressed air introduced through the air port (not shown) and performs a vibration attenuating function while performing the function of the air spring in which the rubber tube 12 moves in an upward and downward direction when the piston rod 13 is repeatedly extended and retracted according to the travel of the vehicle.

Referring together to Fig. 1, the air port (not shown) of the air spring is connected through the leveling valves 4 to the air tank 5 that is the air supply means. When the rubber tube 12 is compressed due to a high load exerted on the vehicle, the compressed air is introduced into the rubber tube from the air tank 5 so that the rubber tube 12 can be restored.

To prevent the occurrence of the roll phenomenon in which the vehicle body 7 is inclined radially outward with respect to a cornering path due to the centrifugal force as shown in Fig. 2 when a lateral motion is produced at the vehicle due to cornering, a conventional method comprises supplying or discharging the compressed air from the air tank 5 to or from the air spring by controlling the leveling valve 4, whereas the present invention controls the spring rate of the air spring through adjustment of the pressure acting volume of the air spring by opening or closing the volume control valve 17. That is, an air spring at a declined side has a higher spring rate through reduction of a pressure acting volume of the air spring by instantaneously closing the volume control valve 17, while an air spring at an opposite side has a lower spring rate through expansion of a pressure acting volume of the air spring by means of the volume expander 16 by instantaneously opening the volume control valve 17, thereby preventing the vehicle from being excessively slanted.

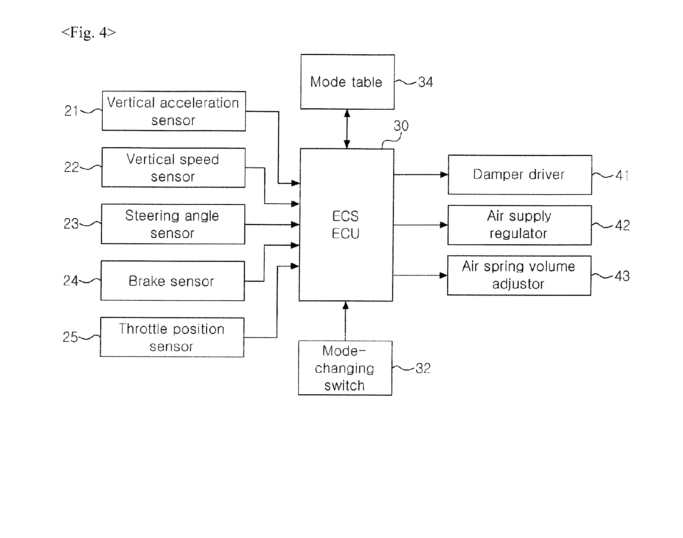

An electronically controlled suspension system employing the aforementioned air suspension can be implemented to have a configuration shown in a block diagram of Fig. 4. Referring to the configuration, the electronically controlled suspension system comprises vertical acceleration sensors 21 attached to the vehicle body above respective road wheels to measure behaviors of the road wheels; a vehicle speed sensor 22; a steering angle sensor 23; a brake sensor 24; a throttle position sensor 25; an electronic control unit (ECS ECU) 30; a mode-changing switch 32 for applying a mode-setting key signal, e.g., a hard mode-setting key signal or a soft mode-setting key signal, according to a driver's button operation; a mode table 34 in which a control range of a spring rate in a mode corresponding to the mode-setting key signal, e.g., in hard mode, is tabulated; a damper driver 41 for controlling damping forces of dampers installed between the vehicle body and respective axles based on damping force control signals from the electronic control unit 30; an air supply regulator 42 for supplying or discharging the compressed air from the air tank to the rubber tube of the air spring based on an air supply control signal from the electronic control unit 30; and an air spring volume adjustor 43 for controlling the spring rate of the air spring through adjustment of the pressure acting volume of the air spring by opening or closing the volume control valve of the air spring based on a valve control signal from the electronic control unit 30.

The electronically controlled suspension system constructed as above improves ride comfort and control stability by causing the damper driver 41 to change motional characteristics of the damper 10 in real time in response to a damping force control signal generated by the electronic control unit 30 according to information from a variety of sensors 21 to 25. That is, the damper 10 is a continuous variable damper in which a variable valve is attached to a side of the damper 10 and two damping control valves are installed in a variable valve assembly to separately control damping forces in extension/compression strokes.

The air supply regulator 42 fills the compressed air into the rubber tube 12 of the air spring through the air port (not shown) in response to the air supply control signal generated by the electronic control unit 30 based on information from a variety of sensors 21 to 25, thereby performing the vibration attenuating function while performing the function of the air spring in which the rubber tube 12 moves in an upward and downward direction when the piston rod 13 is repeatedly extended and retracted according to the travel of the vehicle. In addition, when the rubber tube 12 is compressed due to a high load exerted on the vehicle, the compressed air is introduced into the rubber tube from the air tank 5 so that the rubber tube 12 can be restored.

Meanwhile, the electronic control unit 30 is implemented with a control algorithm for performing ride comfort control logic and anti-roll control logic. The ride comfort control logic implements sky-hook control by changing a damping mode into a hard/soft mode through an extension variable valve of the damper 10 during an extension stroke in which the vehicle body is raised, and into a soft/hard mode through an compression variable valve during a compression stroke in which the vehicle body is lowered, thereby improving ride comfort through control of the movement of the vehicle. The anti-roll control logic suppresses a roll motion of the vehicle by increasing a damping force of the damper 10 when the vehicle is steered. To sense steering input from a driver and control a transient region of the behavior of the vehicle, the anti-roll logic detects a steering angular velocity by receiving a signal from a steering angle sensor 23, and also detects a variation in a lateral accelerator and a roll value in consideration of the steering angular velocity and a vehicle speed from the vehicle speed sensor 22, thereby controlling the damping force of the damper 10.

Further, when the occurrence of a lateral motion due to the cornering of the vehicle as shown in Fig. 2 is detected, the electronic control unit 30 employing the anti-roll control logic outputs a valve control signal for use in controlling the volume control valve 17 to prevent the occurrence of the roll phenomenon in which the vehicle body 7 is inclined radially outward with respect to a cornering path due to the centrifugal force.

Then, in response to the valve control signal from the electronic control unit 30, the air spring volume adjustor 43 increases a spring rate of an air spring at a declined side through reduction of the pressure acting volume of the air spring by instantaneously closing the volume control valve 17, while decreasing a spring rate of an air spring at an opposite side through expansion of a pressure acting volume of the air spring by means of the volume expander 16 by instantaneously opening the volume control valve 17, thereby preventing the vehicle from being excessively slanted.

Further, the electronic control unit 30 outputs a valve control signal for use in controlling the volume control valve 17 in order to exhibit a suspension characteristic of the vehicle according to a mode-setting range tabulated in the mode table 34 in response to the mode-setting key signal from the mode-changing switch 32.

Then, the air spring volume adjustor 43 controls the spring rate according to the preset range by opening or closing the volume control valve 17 in response to the valve control signal from the electronic control valve 30, thereby forcibly setting the suspension characteristic of the vehicle.

For example, if a hard mode-setting key signal is applied by the mode-changing switch 32, the air spring volume adjustor 43 increases the spring rate by closing the volume control valve in response to the valve control signal of the electronic control unit 30 so that the suspension characteristic of the vehicle can be set to the hard mode. That is, the hard mode is to set the suspension characteristic of the vehicle to a sports mode that is focused on driving performance, such as in a sports car, rather than ride comfort.

On the contrary, if a soft mode-setting key signal is applied by the mode-changing switch 32, the air spring volume adjustor 43 decreases the spring rate by opening the volume control valve in response to the valve control signal of the electronic control unit 30 so that the suspension characteristic of the vehicle can be set to the soft mode. That is, the soft mode is to set the suspension characteristic of the vehicle to a normal mode that is focused on ride comfort rather than driving performance.

With the present invention described above, the spring rate of the air spring of the air suspension is selectively controlled to be set to a predetermined range of damping force characteristics by means of a driver's mode-changing operation, so that a driver can arbitrarily and forcibly reflect the suspension characteristics.

As described above, the present invention is to control a spring rate of an air spring employed in an air suspension to a range of damping force characteristics of a relevant mode by selectively controlling a pressure acting volume of the air spring using a fast response valve in response to a signal corresponding to a driver's mode-changing operation. Thus, during sudden braking, rapid acceleration or cornering, a driver can conveniently change characteristics of a vehicle mounted with the air suspension by operating a button within the vehicle, resulting in maximization of consumers' satisfaction.

Although the present invention has been described in connection with the preferred embodiments, it is not limited thereto. It will be apparent that various modifications and changes can be made thereto within the scope of the invention defined by the appended claims.

## Claims

1. An air suspension, **characterized in that** it comprises :
a damper (10) installed between a vehicle body and an axle of a vehicle to absorb a vibration or shock that the axle receives from a road when the vehicle travels;
an air piston (11) installed outside the damper;
a rubber tube (12) coupled to the air piston to function as an air spring;
a cap (14) coupled to an upper portion of the rubber tube and coupled to an upper end of a piston rod (13) of the damper;
a volume expander (16) connected to the outside of the cap and connected to the inside of the rubber tube to expand a pressure acting volume of the rubber tube; and
a volume control valve (17) for opening or closing the connection between the inside of the rubber tube and the volume expander to determine the pressure acting volume of the air spring.

2. An air suspension, **characterized in that** it comprises:
a damper (10) installed between a vehicle body and an axle of a vehicle to absorb a vibration or shock that the axle receives from a road when the vehicle travels;
an air piston (11) installed separately from the damper, between the vehicle body and the axle;
a rubber tube (12) coupled to the air piston to function as an air spring;
a cap (14) coupled to an upper portion of the rubber tube;
a volume expander (16) connected to the outside of the cap and connected to the inside of the rubber tube to expand a pressure acting volume of the rubber tube; and
a volume control valve (17) for opening or closing the connection between the inside of the rubber tube and the volume expander to determine the pressure acting volume of the air spring.

3. The air suspension as claimed in claim 1 or 2, **characterized in that** the volume expander (16) is mounted outside the air piston (11).

4. An electronically controlled suspension system, **characterized in that** it comprises:
an air suspension including a volume expander (16) connected to a pressure acting volume of an air spring to expand the pressure acting volume, and a volume control valve (17) for opening or closing the connection between the pressure acting volume and the volume expander;
a mode-changing switch (32) for applying a mode-setting key signal according to a driver's button operation;
an electronic control unit (30) for outputting a valve control signal for use in exhibiting a suspension characteristic of the vehicle in response to the mode-setting key signal from the mode-changing switch; and
an air spring volume adjustor (43) for controlling a spring rate of the air spring through adjustment of the pressure acting volume of the air spring by opening or closing the volume control valve in response to the valve control signal from the electronic control valve, thereby forcibly setting the suspension characteristic of the vehicle.

5. The system as claimed in claim 4, **characterized in that** the valve control signal is a hard mode characteristic control signal corresponding to a hard mode-setting key signal from the mode-changing switch (32).

6. The system as claimed in claim 5, **characterized in that** the hard mode characteristic control signal increases the spring rate of the air spring by closing the volume control valve (17).

7. The system as claimed in claim 4, **characterized in that** the valve control signal is a soft mode characteristic control signal corresponding to a soft mode-setting key signal from the mode-changing switch (32).

8. The system as claimed in claim 7, **characterized in that** the soft mode characteristic control signal decreases the spring rate of the air spring by opening the volume control valve (17).
